# EUROPEAN PATENT APPLICATION

(11) **EP 4 340 318 A1**
(43) Date of publication of application: **20.03.2024**
(21) Application number: 22806841.7
(22) Date of filing: 12.05.2022
(51) Int. Cl.: H04L 45/00, H04L 45/74

(54) **ROUTING OBTAINING METHOD AND APPARATUS, STORAGE MEDIUM, AND ELECTRONIC APPARATUS**

(30) Priority: 12.05.2021 CN 202110519239
(71) Applicant: ZTE Corporation, Shenzhen, Guangdong 518057 (CN)
(72) Inventor: CHEN, Ran, Shenzhen, Guangdong 518057 (CN); WU, Haisheng, Shenzhen, Guangdong 518057 (CN); PENG, Shaofu, Shenzhen, Guangdong 518057 (CN)
(74) Representative: Cristinelli, Luca
(86) International application number: PCT/CN2022/092504
(87) International publication number: WO 2022/237879

(57) **Abstract**

Provided are a route acquisition method and apparatus, a route transmission method and apparatus, a storage medium, and an electronic apparatus. The route acquisition method includes: acquiring a Flowspec route from a controller, where the Flowspec route contains a target rule, and the target rule is configured to instruct received traffic to be redirected to one or more target SR-policies.

## Description

### Cross-Reference to Related Application

The disclosure claims the priority of Chinese Patent Application No. CN202110519239.X, filed on May 12, 2021 and entitled "ROUTING OBTAINING METHOD AND APPARATUS, STORAGE MEDIUM, AND ELECTRONIC APPARATUS", which is incorporated in its entirety herein by reference.

### Technical Field

Examples of the disclosure relate to the field of communication, and in particular to a route acquisition method and apparatus, a route transmission method and apparatus, a storage medium, and an electronic apparatus.

### Background

In an initial stage, a conventional route was designed for traffic forwarding, and only prefix mask information for destination address matching and traffic egress interface information were involved in a route entry. With a network service developing, a route is expected to support traffic policies (such as a static policy route), so as to satisfy distributed denial of service (DDOS) attack prevention, traffic engineering, etc. A forwarding route entry is required to further divide a data flow. For example, a data flow can be matched according to a destination address, as well as a source address, an Internet protocol (IP) protocol number, a port number, etc. Apart from forwarding from a certain egress interface, flow processing action information includes speed limiting, discarding, redirecting, etc. When it comes to a policy-based route, configuring all devices one after another locally is the major limitation. In consequence, enormous manual configuration workloads, high requirements for operation and maintenance personnel, and undesirable maintainability of network tuning are caused.

### Summary

Examples of the disclosure provide a route acquisition method and apparatus, a route transmission method and apparatus, a storage medium, and an electronic apparatus, so as to at least solve undesirable network tuning performance in the related art.

A route acquisition method is provided according to an example of the disclosure. The method includes:
acquiring a flow specification (Flowspec) route from a controller, where the Flowspec route contains a target rule, and the target rule is configured to instruct received traffic to be redirected to one or more target segment routing policies (SR-policies).

In an illustrative example, after the acquiring a flow specification (Flowspec) route from a controller, the method further includes:
after the traffic is received, redirecting the traffic to the target SR-policy based on the target rule.

In an illustrative example, the target rule includes a target condition and a target action, where the target condition includes a condition for matching the traffic, and the target action is action information executed on the traffic after the traffic is matched.

In an illustrative example, the target condition is carried by network layer reachability information (NLRI) contained in the Flowspec route.

In an illustrative example, the target action is carried by an extended community attribute contained in the Flowspec route.

In an illustrative example, the extended community attribute includes a target bit, and the target bit is configured to identify a target relation between the extended community attribute and other received community attributes; and the target relation includes one of the following: the extended community attribute overrides the other community attributes, or the extended community attribute coexists with the other community attributes.

In an illustrative example, the extended community attribute and the other community attributes are transmitted by the controller at the same time or different time.

In an illustrative example, the extended community attribute and the other community attributes are set for the same group of flows or the same service.

In an illustrative example, the extended community attribute includes a target field, where the target field has a pre-determined value, and the pre-determined value is configured to indicate an identifier type of the target SR-policy.

In an illustrative example, the pre-determined value includes at least one of the following:
a type value of a local identifier (ID) and a pre-defined type value.

In an illustrative example, the extended community attribute includes an identifier of the SR-policy, where an identifier of an SR-policy group is carried by an SR-policy identifier field in the case that the local ID identifies a meaning of the SR-policy group or the pre-defined type value means a meaning of the SR-policy group.

In an illustrative example, the Flowspec route further includes an extended tunnel encapsulation attribute; and the tunnel encapsulation attribute is configured to identify an SR-sub-policy in a target SR-policy group under the condition that the target SR-policy includes an SR-policy type identified by the pre-determined value.

In an illustrative example, the Flowspec route further includes an extended tunnel encapsulation attribute, and the target action is carried jointly by the extended community attribute and the extended tunnel encapsulation attribute.

In an illustrative example, the redirecting the received traffic to the target SR-policy based on the target rule includes:
matching the traffic according to the target condition; and
processing the traffic according to the target action under the condition that the target action corresponding to the traffic is matched, so as to redirect the traffic to the target SR-policy.

In an illustrative example,
the matching the traffic according to the target condition includes: matching the traffic in a first pre-generated flow matching entry, where the first flow matching entry includes a target condition and a target action that correspond to each other, the target condition is configured to indicate matching information, and the target action is configured to indicate an SR-policy; and
the processing the traffic according to the target action under the condition that the target action corresponding to the traffic is matched, so as to redirect the traffic to the target SR-policy includes: redirecting the traffic to the target SR-policy in the first flow matching entry under the condition that the traffic is matched in the first pre-generated flow matching entry.

In an illustrative example, after address matching is performed on the traffic in the first pre-generated flow matching entry, the method further includes:
transmitting a first instruction to a processor to instruct the processor to generate a second flow matching entry under the condition that no target action corresponding to the traffic is matched in the first pre-generated flow matching entry, where the second flow matching entry includes the target condition configured for an indication.

In an illustrative example, the method further includes:
receiving a second instruction from a processor; and
deleting the first flow matching entry based on the second instruction.

A route transmission method is provided according to another example of the disclosure. The method includes:
transmitting a flow specification (Flowspec) route to a target client, where the Flowspec route contains a target rule, and the target rule is configured to instruct received traffic to be redirected to one or more target segment routing policies (SR-policies).

In an illustrative example,
the target rule includes a target condition and a target action, where the target condition includes a condition for matching the traffic, and the target action is action information executed on the traffic after the traffic is matched.

In an illustrative example, the target action is carried by an extended community attribute contained in the Flowspec route.

In an illustrative example, the extended community attribute includes a target field, where the target field has a pre-determined value, and the pre-determined value is configured to indicate an identifier type of the target SR-policy.

In an illustrative example, the extended community attribute includes an identifier of the SR-policy, where an identifier of an SR-policy group is carried by an SR-policy identifier field in the case that a local ID identifies a meaning of the SR-policy group or a pre-defined type value means a meaning of the SR-policy group.

A route acquisition apparatus is provided according to yet another example of the disclosure. The apparatus includes:
an acquisition module configured to acquire a flow specification (Flowspec) route from a controller, where the Flowspec route contains a target rule, and the target rule is configured to instruct received traffic to be redirected to one or more target segment routing policies (SR-policies).

A route transmission apparatus is provided according to yet another example of the disclosure. The apparatus includes:
a sending module configured to transmit a flow specification (Flowspec) route to a target client, where the Flowspec route contains a target rule, and the target rule is configured to instruct received traffic to be redirected to one or more target segment routing policies (SR-policies).

A computer-readable storage medium is further provided according to yet another example of the disclosure. The computer-readable storage medium stores a computer program, where the computer program is configured to execute steps of any one of the above method examples when run.

An electronic apparatus is further provided according to still another example of the disclosure. The electronic apparatus includes a memory and a processor, where the memory stores a computer program, and the processor is configured to execute steps of any one of the above method examples when running the computer program.

### Brief Description of the Drawings

Fig. 1 is a flowchart of a route acquisition method according to an example of the disclosure;
Fig. 2 is a flowchart of a route transmission method according to an example of the disclosure;
Fig. 3 is a structural block diagram of a route acquisition apparatus according to an example of the disclosure;
Fig. 4 is a structural block diagram of a route transmission apparatus according to an example of the disclosure;
Fig. 5 is a schematic structural diagram according to Specific Example 1 of the disclosure;
Fig. 6 is a flowchart according to Specific Example 1 of the disclosure;
Fig. 7 is a schematic structural diagram of an extended community attribute according to a specific example of the disclosure;
Fig. 8 is a schematic structural diagram of an extended tunnel encapsulation attribute according to a specific example of the disclosure;
Fig. 9 is a schematic structural diagram according to Specific Example 2 of the disclosure; and
Fig. 10 is a schematic structural diagram according to Specific Example 5 of the disclosure.

### Detailed Description of the Embodiments

The examples of the disclosure will be described in detail below in conjunction with the accompanying drawings and the examples.

It should be noted that the terms "first", "second", etc. in the description and claims of the disclosure and the above accompanying drawings are used for distinguishing between similar objects, instead of necessarily describing a particular sequence or a successive order.

A method example according to the example of the disclosure can be executed in a mobile terminal, a computer terminal, or a similar apparatus. The similar apparatus includes, but is not limited to, a switch, a router, etc. The mobile terminal can be, but is not limited to, a mobile phone or another device with a remote communication function.

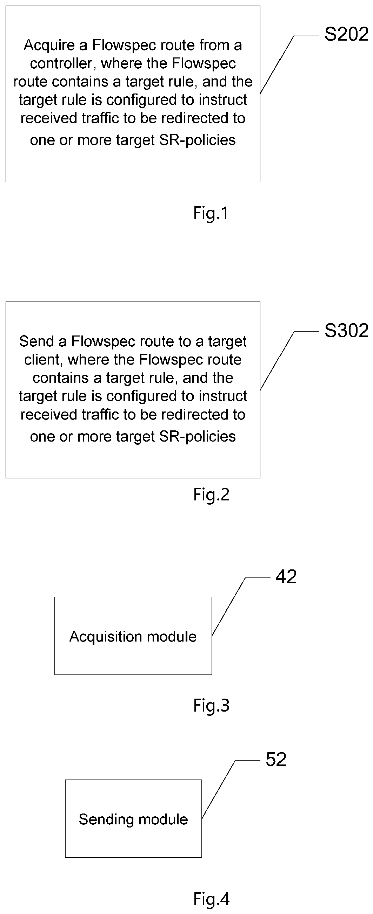

A route acquisition method is provided according to the example. Fig. 1 is a flowchart of a route acquisition method according to an example of the disclosure. As shown in Fig. 1, the process includes:
S202, a flow specification (Flowspec) route from a controller is acquired, where the Flowspec route contains a target rule, and the target rule is configured to instruct received traffic to be redirected to one or more target segment routing policies (SR-Policies).

In the example, since the controller transmits the Flowspec route containing the target rule to a client, the client can match and filter the traffic according to the target rule, and transmit filtered traffic to a processing node corresponding to the target rule. Accordingly, a traffic transmission path can be optimized, and a traffic processing efficiency can be improved.

The controller can be an apparatus, module, or node having a logical computation function, such as a central processing unit (CPU), a field-programmable gate array (FPGA), etc. The client can be one or more nodes on the SR-policy. A plurality of Flowspec routes can be transmitted simultaneously or sequentially. Alternatively, a plurality of Flowspec routes can be sent one after another.

Through the above steps, since the controller transmits the Flowspec route containing the target rule to the client, the client can match and filter the traffic according to the target rule and transmit filtered traffic to the processing node corresponding to the target rule. Accordingly, the path can be rapidly optimized, and a traffic path can be adjusted and tuned, so that a problem of undesirable network tuning performance in the related art can be solved, and a network tuning efficiency can be improved. Moreover, the Flowspec route containing the target rule can be transmitted at the same time or different time, and one or more Flowspec routes can be provided. Therefore, the same service or traffic received at the same time or different time can be redirected to one or more SR-policies. Accordingly, a processing efficiency of the traffic or the same service is improved.

An execution entity of the above steps can be, but is not limited to, a base station, a terminal, etc.

In an alternative example, after the step that a flow specification (Flowspec) route from a controller is acquired, the method further includes:
S204, after being received, the traffic is redirected to one or more target SR-policies based on the target rule.

In the example, after the traffic is received, the traffic is matched and filtered according to the target rule, and then the filtered traffic is transmitted to the target SR-policy, so as to be redirected.

In an alternative example, the target rule includes a target condition and a target action, where the target condition includes a condition for matching the traffic, and the target action is action information executed on the traffic after the traffic is matched.

In the example, the condition for matching the traffic can include, but is not limited to, a source address (SA) of a message, a destination address (DA), a trellis encoding type of traffic, an identifier of traffic, a differentiated services code point (DSCP), etc. The action information executed on the traffic includes, but is not limited to, instructions to forward, recognize, code, decode, and store the traffic, a destination address, a storage position, etc.

It should be noted that a plurality of target conditions and a plurality of target actions can be provided. In this case, a plurality of pieces of action information and a plurality of conditions that correspond to each other can also be provided.

In an alternative example, the target condition is carried by network layer reachability information (NLRI) contained in the Flowspec route.

In an alternative example, the target action is carried by an extended community attribute contained in the Flowspec route.

In an alternative example, the extended community attribute includes a target bit, and the target bit is configured to identify a target relation between the extended community attribute and other received community attributes; and the target relation includes one of the following: the extended community attribute overrides other community attributes, or the extended community attribute coexists with other community attributes.

In the example, setting can be performed in, but not limited to, the following manners: when the target bit is set to 1, it means that the node generates a new filtering rule for the same matching condition, and does not override a previously generated filtering rule; and when no target bit is set, it means that the node generates only one filtering rule for the same matching condition, so as to override a previously generated filtering rule.

In an alternative example, the extended community attribute and other community attributes are transmitted by the controller at the same time or different time.

In an alternative example, the extended community attribute and other community attributes are set for the same group of flows or the same service.

In an alternative example, the extended community attribute includes a target field, where the target field has a pre-determined value, and the pre-determined value is configured to indicate an identifier type of the target SR-policy.

In the example, the target field can be an ID-type, etc.

In an alternative example, the pre-determined value includes at least one of the following:
a type value of a local identifier (ID) and a pre-defined type value.

In the example, the pre-determined value can also be one of the following:
1: a segment identifier (SID) (index), where a corresponding generalized indirection_id is the SID (index);
2: an SID (Label), where a corresponding generalized indirection_id is the SID (Label);
3: a binding segment identifier (BSID) (index), where a corresponding generalized indirection_id is the BSID (index);
4: a BSID (label), and a corresponding generalized indirection_id is the BSID (label); and
5: a tunnel ID, where a corresponding generalized indirection_id is the tunnel ID.

In an alternative example, the extended community attribute includes an identifier of the SR-policy, where an identifier of an SR-policy group is carried by an SR-policy identifier field under the condition that the local ID identifies a meaning of the SR-policy group or the pre-defined type value means a meaning of the SR-policy group.

In the example, the SR-policy identifier field configured to identify the meaning of the SR-policy group and a meaning of an SR-sub-policy is required to be configured in the Flowspec route, so that the meaning of the SR-policy group is identified.

In an alternative example, the Flowspec route further includes an extended tunnel encapsulation attribute; and the tunnel encapsulation attribute is configured to identify an SR-sub-policy in a target SR-policy group under the condition that the target SR-policy includes an SR-policy type identified by the pre-determined value.

In the example, the extended tunnel encapsulation attribute can be set to realize the effect of carrying the target SR-policy group in the presence of a plurality of SR-policies. The action information of the target action is carried jointly by the extended tunnel encapsulation attribute and the extended community attribute.

In an alternative example, the Flowspec route further includes an extended tunnel encapsulation attribute, and the target action is carried jointly by the extended community attribute and the extended tunnel encapsulation attribute.

In an alternative example, the step that the received traffic is redirected to the target SR-policy based on the target rule includes:
S2042, the traffic is matched according to the target condition; and
S2044, the traffic is processed according to the target action under the condition that the target action corresponding to the traffic is matched, so as to redirect the traffic to the target SR-policy.

In an alternative example,
the step that the traffic is matched according to the target condition includes: the traffic is matched in a first pre-generated flow matching entry, where the first flow matching entry includes a target condition and a target action that correspond to each other, the target condition is configured to indicate matching information, and the target action is configured to indicate an SR-policy; and
the traffic is processed according to the target action under the condition that the target action corresponding to the traffic is matched, so as to redirect the traffic to the target SR-policy includes: the traffic is redirected to the target SR-policy in the first flow matching entry under the condition that the traffic is matched in the first pre-generated flow matching entry.

In the example, the first flow matching entry can be constructed at the controller and transmitted to the client by the controller along with the Flowspec route.

In an alternative example, after address matching is performed on the traffic in the first pre-generated flow matching entry, the method further includes:
a first instruction is transmitted to a processor to instruct the processor to generate a second flow matching entry under the condition that no target action corresponding to the traffic is matched in the first pre-generated flow matching entry, where the second flow matching entry includes the target condition configured for an indication.

In the example, when no target action corresponding to the traffic is matched, the traffic is uploaded to a CPU to trigger generation of a second related flow matching entry. In this case, a forwarding action copies a latest border gateway protocol flow specification (BGP-FS) for SRv6 policy (for example, SRv6 policy-2 issued at time T2).

In an alternative example, the method further includes:
S206, a second instruction from a processor is received; and
S208, the first flow matching entry is deleted based on the second instruction.

In the example, a platform is required to collect traffic statistics of a particular "flow entry" of a forwarding plane, and ages the particular "flow entry" and issues a deletion instruction to the forwarding plane if no traffic is newly added within a certain period of time, so as to instruct the forwarding plane to delete the particular flow entry.

In an alternative example, as shown in Fig. 2, a route transmission method is further provided according to the example. The method includes:
S302, a flow specification (Flowspec) route is transmitted to a target client, where the Flowspec route contains a target rule, and the target rule is configured to instruct received traffic to be redirect to one or more target segment routing policies (SR-policies).

In an alternative example, the target rule includes a target condition and a target action, where the target condition includes a condition for matching the traffic, and the target action is action information executed on the traffic after the traffic is matched.

In an alternative example, the target condition is carried by network layer reachability information (NLRI) contained in the Flowspec route.

In an alternative example, the target action is carried by an extended community attribute contained in the Flowspec route.

In an alternative example, the extended community attribute includes a target bit, and the target bit is configured to identify a target relation between the extended community attribute and other received community attributes; and the target relation includes one of the following: the extended community attribute overrides other community attributes, or the extended community attribute coexists with other community attributes.

In an alternative example, the extended community attribute and other community attributes are transmitted by the controller at the same time or different time.

In an alternative example, the extended community attribute and other community attributes are set for the same group of flows or the same service.

In an alternative example, the extended community attribute includes a target field, where the target field has a pre-determined value, and the pre-determined value is configured to indicate an identifier type of the target SR-policy.

In an alternative example, the pre-determined value includes at least one of the following:
a type value of a local ID and a pre-defined type value.

In an alternative example, the extended community attribute includes an identifier of the SR-policy, where an identifier of an SR-policy group is carried by an SR-policy identifier field under the condition that the local ID identifies a meaning of the SR-policy group or the pre-defined type value means a meaning of the SR-policy group.

In an alternative example, the Flowspec route further includes an extended tunnel encapsulation attribute; and the tunnel encapsulation attribute is configured to identify an SR-sub-policy in a target SR-policy group under the condition that the target SR-policy includes an SR-policy type identified by the pre-determined value.

In an alternative example, the Flowspec route further includes an extended tunnel encapsulation attribute, and the target action is carried jointly by the extended community attribute and the extended tunnel encapsulation attribute.

Through the above description of the embodiments, those skilled in the art can clearly understand that the methods in the above examples can be implemented in combination of software and a necessary general-purpose hardware platform, and can certainly be implemented through hardware. The former is a preferred embodiment in many cases. Based on such understanding, the technical solution in essence of the disclosure or the part that contributes to the prior art can be embodied in the form of software products. The computer software product is stored in one storage medium (such as a read-only memory (ROM)/a random access memory (RAM), a magnetic disk, or an optical disk), and includes several instructions to make one terminal device (such as a mobile phone, a computer, a server, or a network device) execute the method in each example of the disclosure.

A route acquisition apparatus is further provided in the example. The apparatus is configured to implement the above example and the preferred embodiment, the repetitions of which will not be described in detail herein. As used below, the term "module" can be a combination of software and/or hardware that implements a preset function. While the apparatus described in the following example is preferably implemented through software, it is possible to conceive that the apparatus is implemented through hardware, or a combination of the software and the hardware.

Fig. 3 is a structural block diagram of a route acquisition apparatus according to an example of the disclosure. As shown in Fig. 3, the apparatus includes:
an acquisition module 42 configured to acquire a flow specification (Flowspec) route from a controller, where the Flowspec route contains a target rule, and the target rule is configured to instruct received traffic to be redirected to one or more target segment routing policies (SR-policies).

In an alternative example, the apparatus further includes:
a redirection module 44 configured to redirect the traffic to the target SR-policy based on the target rule after the flow specification (Flowspec) route from the controller is acquired and the traffic received.

In an alternative example, the target rule includes a target condition and a target action, where the target condition includes a condition for matching the traffic, and the target action is action information executed on the traffic after the traffic is matched.

In an alternative example, the target condition is carried by network layer reachability information (NLRI) contained in the Flowspec route.

In an alternative example, the target action is carried by an extended community attribute contained in the Flowspec route.

In an alternative example, the extended community attribute includes a target bit, and the target bit is configured to identify a target relation between the extended community attribute and other received community attributes; and the target relation includes one of the following: the extended community attribute overrides other community attributes, or the extended community attribute coexists with other community attributes.

In an alternative example, the extended community attribute and other community attributes are transmitted by the controller at the same time or different time.

In an alternative example, the extended community attribute and other community attributes are set for the same group of flows or the same service.

In an alternative example, the extended community attribute includes a target field, where the target field has a pre-determined value, and the pre-determined value is configured to indicate an identifier type of the target SR-policy.

In an alternative example, the pre-determined value includes at least one of the following:
a type value of a local ID and a pre-defined type value.

In an alternative example, the extended community attribute includes an identifier of the SR-policy, where an identifier of an SR-policy group is carried by an SR-policy identifier field under the condition that the local ID identifies a meaning of the SR-policy group or the pre-defined type value means a meaning of the SR-policy group.

In an alternative example, the Flowspec route further includes an extended tunnel encapsulation attribute; and the tunnel encapsulation attribute is configured to identify an SR-sub-policy in a target SR-policy group under the condition that the target SR-policy includes an SR-policy type identified by the pre-determined value.

In the example, the extended tunnel encapsulation attribute can be set to realize the effect of carrying the target SR-policy group in the presence of a plurality of SR-policies. The action information of the target action is carried jointly by the extended tunnel encapsulation attribute and the extended community attribute.

In an alternative example, the Flowspec route further includes an extended tunnel encapsulation attribute, and the target action is carried jointly by the extended community attribute and the extended tunnel encapsulation attribute.

In an alternative example, the redirection module 44 includes:
a matching unit 42 configured to match the traffic according to the target condition; and
a redirection unit 44 configured to process the traffic according to the target action under the condition that the target action corresponding to the traffic is matched, so as to redirect the traffic to the target SR-policy.

In an alternative example,
the matching unit 42 includes:
a first entry matching sub-unit 422 configured to match the traffic in a first pre-generated flow matching entry, where the first flow matching entry includes a target condition and a target action that correspond to each other, the target condition is configured to indicate matching information, and the target action is configured to indicate an SR-policy; and
the redirection unit 44 includes:
   a redirection sub-unit 442 configured to redirect the traffic to the target SR-policy in the first flow matching entry under the condition that the traffic is matched in the first pre-generated flow matching entry.

In an alternative example, the apparatus further includes:
a second entry generation unit 424 configured to transmit a first instruction to a processor to instruct the processor to generate a second flow matching entry under the condition that no target action corresponding to the traffic is matched in the first pre-generated flow matching entry after address matching is performed on the traffic in the first pre-generated flow matching entry, where the second flow matching entry includes the target condition configured for an indication.

In an alternative example, the apparatus further includes:
an instruction reception module 46 configured to receive a second instruction from a processor; and
an entry deletion module 48 configured to delete the first flow matching entry based on the second instruction.

Fig. 4 is a structural block diagram of a route transmission apparatus according to an example of the disclosure. As shown in Fig. 4, the apparatus includes:
a sending module 52 configured to transmit a flow specification (Flowspec) route to a target client, where the Flowspec route contains a target rule, and the target rule is configured to instruct received traffic to be redirected to one or more target segment routing policies (SR-policies).

In an alternative example, the target rule includes a target condition and a target action, where the target condition includes a condition for matching the traffic, and the target action is action information executed on the traffic after the traffic is matched.

In an alternative example, the target condition is carried by network layer reachability information (NLRI) contained in the Flowspec route.

In an alternative example, the target action is carried by an extended community attribute contained in the Flowspec route.

In an alternative example, the extended community attribute includes a target bit, and the target bit is configured to identify a target relation between the extended community attribute and other received community attributes; and the target relation includes one of the following: the extended community attribute overrides other community attributes, or the extended community attribute coexists with other community attributes.

In an alternative example, the extended community attribute and other community attributes are transmitted by the controller at the same time or different time.

In an alternative example, the extended community attribute and other community attributes are set for the same group of flows or the same service.

In an alternative example, the extended community attribute includes a target field, where the target field has a pre-determined value, and the pre-determined value is configured to indicate an identifier type of the target SR-policy.

In an alternative example, the pre-determined value includes at least one of the following:
a type value of a local ID and a pre-defined type value.

In an alternative example, the extended community attribute includes an identifier of the SR-policy, where an identifier of an SR-policy group is carried by an SR-policy identifier field under the condition that the local ID identifies a meaning of the SR-policy group or the pre-defined type value means a meaning of the SR-policy group.

In an alternative example, the Flowspec route further includes an extended tunnel encapsulation attribute; and the tunnel encapsulation attribute is configured to identify an SR-sub-policy in a target SR-policy group under the condition that the target SR-policy includes an SR-policy type identified by the pre-determined value.

In the example, the extended tunnel encapsulation attribute can be set to realize the effect of carrying the target SR-policy group in the presence of a plurality of SR-policies. The action information of the target action is carried jointly by the extended tunnel encapsulation attribute and the extended community attribute.

In an alternative example, the Flowspec route further includes an extended tunnel encapsulation attribute, and the target action is carried jointly by the extended community attribute and the extended tunnel encapsulation attribute.

It should be noted that each module described above can be implemented through software or hardware. In the case of hardware, the modules can be implemented in, but not limited to, the following manners: the above modules are positioned in the same processor; and alternatively, the above modules are positioned in different processors in any combination.

A computer-readable storage medium is further provided in an example of the disclosure. The computer-readable storage medium stores a computer program, where the computer program is configured to execute steps of any one of the above method examples when run.

In an illustrative example, the above computer-readable storage media can include, but are not limit to, various media storing a computer program, such as a universal serial bus (USB) flash disk, a read-only memory (ROM), a random access memory (RAM), a mobile hard disk, a magnetic disk or an optical disk, etc.

An electronic apparatus is further provided in an example of the disclosure. The electronic apparatus includes a memory and a processor, where the memory stores a computer program, and the processor is configured to execute steps of any one of the above method examples when running the computer program.

In an illustrative example, the above electronic apparatus can further include a transmitting device and an input/output device, where the transmitting device and the input/output device are connected to the above processor.

Reference can be made to the instances described in the above examples and the illustrative embodiments for the specific instances in the example, which will not be repeated herein.

The disclosure will be described below in combination with the specific examples.

### Specific Example 1

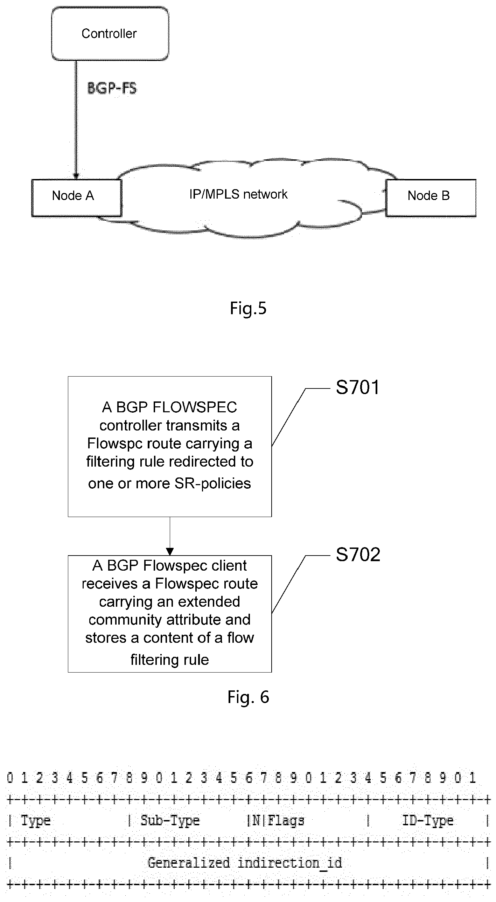

As shown in Figs. 5 and 6, the disclosure specifically includes the primary implementation steps as follows:
Step 701: a BGP FLOWSPEC controller transmits a flow specification (Flowspc) route carrying a filtering rule redirected to one or more segment routing-policies (SR-policies).
Step 702, a BGP Flowspec client receives a Flowspec route carrying an extended community attribute and stores a content of a flow filtering rule.

A slice/application filtering rule includes: a matching condition and an execution action after traffic matching. The matching condition is carried by the network layer reachability information (NLRI). A matching type contained in the matching condition can be a currently defined Flowspec component type based on a source address of a data packet/a destination address/a DSCP. In a matching process, traffic can be matched according to the matching condition. The execution action after traffic matching is carried by the extended community attribute. A bit can be set in an existing redirection community attribute to identify whether the community attribute overrides community attributes transmitted at different times/the same time or the community attribute coexists with those community attributes.

It should be noted that the extended redirection community attribute includes:
1) a format of the extended community attribute redirected to an indirection-id, as shown in Fig. 7, where
   a bit N is set to 1, which means that a node generates a new filtering rule for the same matching condition, and does not override a previously generated filtering rule; and
   no bit N is set, which means that a node generates only one filtering rule for the same matching condition, so as to override a previously generated filtering rule; and
   further, Fig. 7 further includes:
      an ID-type:
      0: a local ID, where a corresponding generalized indirection_id is the local ID;
      1: an SID (index), where a corresponding generalized indirection_id is the SID (index);
      2: an SID (Label), where a corresponding generalized indirection_id is the SID (Label);
      3: a BSID (index), where a corresponding generalized indirection_id is the BSID (index);
      4: a BSID (label), and a corresponding generalized indirection_id is the BSID (label); and
      5: a tunnel ID, where a corresponding generalized indirection_id is the tunnel ID.
2) a format of the extended community attribute redirected to an indirection-id, as shown in Fig. 7, where an ID-type field can be defined through a newly defined content, so that a generalized indirection_id corresponding to the corresponding ID-type field is an SR-policy group; and alternatively, an ID-type field can also be defined through a currently defined content, such as 0: a local ID. In this case, a corresponding Generalized indirection_id is the local ID, and the local ID indicates an SR-policy group.

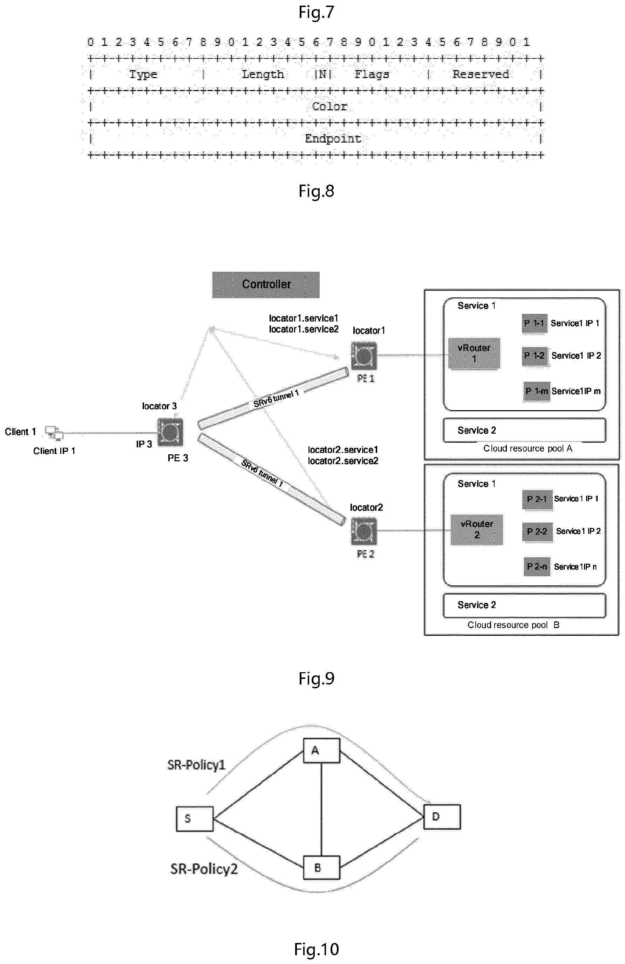

In addition, as shown in Fig. 8, a new tunnel encapsulation attribute sub-tag, length, and value (TLV):SR-policy sub-TLV can be defined following a tunnel encapsulation attribute, where
a bit N is set to 1, which means that a node generates a new filtering rule for the same matching condition, and does not override a previously generated filtering rule; and
no bit N is set, which means that a node generates only one filtering rule for the same matching condition, so as to override a previously generated filtering rule.

Color+Endpoint is configured to identify one SR-policy. If a plurality of SR-policies are to be identified, a plurality of SR-policy sub-TLVs are required to be carried. The BSID can also be configured to identify one SR-policy. That is, the SR-policy sub-TLV has various formats, and only one format is provided in the example.

In this case, the execution action after traffic matching can be carried by <the extended community attribute redirected to the extended indirection-id, and the new tunnel encapsulation attribute sub-TLV:SR-policy sub-TLV>, so that the plurality of SR-policies can be carried.

It should be noted that the flow filtering rule includes the matching type and the execution action. Since the matching type is carried by the NLRI in Flowspec route, the execution action is carried by the extended community attribute.

### Specific Example 2

As shown in Fig. 9, under the condition that host client 1 is required to access remote computation resource service 1, a controller notifies a BGP Flowspec client of a latest redirection policy for a certain service in real time. In this case, a basic principle of the redirection policy is to redirect to an idle cloud resource pool. An idle state of the cloud resource pool is available through polling, access, etc. In order to implement the redirection policy, filtering rules issued at different times can be redirected to the plurality of SR-policies. Specifically, in Fig. 9, a segment list corresponding to SR-policy 1 is {PE1}, and a segment list corresponding to SR-policy 2 is {PE2}. In this case, a Binding SID is configured to identify one SR-policy.

In this case, specific steps are as follows:
Step 1001: when required to access remote computation resource service 1, host client 1 generates a service message <SA=client1-IP, DA=service1-IP> and transmits the service message to provider edge (PE)3.
Step 1002: on provider edge (PE)3, firstly, a "flow matching rule entry" is matched according to a feature <SA, DA> of the service message. An entry content contained in the "flow matching rule entry" is similar with that of a conventional policy-based route entry, so as to be collectively maintained during implementation. Accordingly, the service message can be guided to the SR policy to reach a peer cloud resource pool. In this case, the SR policy is an SRv6 policy in a format PIv6.

It should be noted that before encapsulating the SRv6 policy of an outer layer for the service message, PE3 is required to perform network address translation (NAT) on an SA of the service message, so that the SA is translated to a public IP address of PE3 (PE3-NAT-IP).

The "flow filtering rule entry" is constructed through two primary steps:
1) The controller notifies the BGP Flowspec client of the latest redirection policy for the certain service in real time. The basic principle is to redirect to the idle cloud resource pool.

Then, the BGP Flowspec client receives a flow-route redirected to the SRv6 policy from the controller through BGP-Flowspec. The contents carried by a BGP flow-route include:
a matching condition, which is carried by the NLRI and has a specific format of match DA: service IP; and
an action after matching, which is carried by the extended community attribute redirected to an extended indirection-id and has a specific format as follows:
   action: set <extended community attribute redirected to extended indirection-id: Binding SID1 >.

The extended community attribute redirected to the extended indirection-id is extended by one flag bit: N. When the flag bit is configured to identify the extended community attribute carrying a plurality of extended indirection-ids at different times for the same matching condition, the community attributes are in an additional addition relation instead of an overriding relation. Other formats remain unchanged.

The Binding SID is configured to associate the SR-policy, Binding SID1 is configured to associate SR-policy 1, and Binding SID2 is configured to associate SR-policy 2. That is,
flow-route:match service-1 IP, set Binding SID1 is received from the controller at time T1. A segment list of SRv6 policy-1 is {PE1}, and a service flow is expected to be guided to resource pool A; and
flow-route:match service-1 IP, setBinding SID2 is received from the controller at time T2. A segment list of SRv6 policy-2 is {PE2}, and a service flow is expected to be guided to resource pool B.

2) The BGP Flowspec client generates two items in a "flow matching and filtering entry".

The content of the"flow matching and filtering entry" is shown in Table 1.

**Table 1**

| Matching condition | action after traffic matching |
|---|---|
| <SA=client1-IP, DA=service1-IP> | Binding SID1 |
| <SA=client1-IP, DA=service1-IP> | Binding SID2 |

In addition, when finding that the service message cannot hit one flow entry (SA, DA), the forwarding plane transmits the service message to the CPU, so as to trigger generation of a related flow entry. A forwarding action copies a latest BGP-FS for SRv6 policy (for example, SRv6 policy-2 issued at time T2).

Further, a platform is required to collect traffic statistics of a particular "flow entry" of the forwarding plane, and ages the particular "flow entry" and issues a deletion instruction to the forwarding plane if no traffic is newly added within a certain period of time.

### Specific Example 3:

A working scenario is the same as that in Specific Example 2. However, the differences from Specific Example 2 lie in that in the example, color+Endpoint is configured to identify an SR-policy, and a "flow filtering rule entry" is constructed differently. In the example, the "flow filtering rule entry" is constructed as follows:
1) A controller notifies a BGP Flowspec client of a latest redirection policy for a certain service in real time. A basic principle is to redirect to an idle cloud resource pool.

Then, the BGP Flowspec client receives a flow-route redirected to the SRv6 policy from the controller through BGP-Flowspec. The contents carried by a BGP flow-route include:
a matching condition, which is carried by NLRI and has a specific format of match DA: service IP; and
an action after matching, which is carried jointly by an extended community attribute redirected to an extended indirection-id and a tunnel encapsulation attribute SR-policy sub-TLV and has a specific format as follows:
   action: set <extended community attribute redirected to extended indirection-id:identifier of SR policy group, SR-policy sub-TLV:color+Endpoint>.

For the extended community attribute redirected to the extended indirection-id, the SR policy group has two extensions: 1) A format of the extended community attribute redirected to the indirection-id, as shown in Fig. 7, is used, where an ID-type field defines a new type: the SR-policy group, and a corresponding generalized indirection_id is the SR-policy group or an existing 0. 2) An existing ID-type field, 0: a local ID, is used, where a corresponding Generalized indirection_id is the local ID, and the local ID means the SR-policy group.

The SR-policy sub-TLV is configured to carry color+endpoint, so as to identify one SR-policy. A plurality of SR-policy sub-TLVs, newly defined tunnel encapsulation attribute sub-TLVs, can be carried.

For example,
flow-route:match service-1 IP, set <extended community attribute redirected to extended indirection-id:identifier of SR policy group:1, SR-policy sub-TLV:color C1+Endpoint:PE1> is received from the controller at time T1. A segment list of SRv6 policy-1 is {PE1}, and a service flow is expected to be guided to resource pool A; and
flow-route:match service-1 IP, set <extended community attribute redirected to extended indirection-id:identifier of SR policy group:1, SR-policy sub-TLV:color C2+Endpoint:PE2> is received from the controller at time T2. A segment list of SRv6 policy-2 is {PE2}, and a service flow is expected to be guided to resource pool B.

Since the SR-policy sub-TLV carries a bit N, and the bit N is set to 1, it means that a node generates a new filtering rule for the same matching condition, and does not override a previously generated filtering rule.

2) The BGP Flowspec client generates two items in a "flow matching and filtering entry".

The content of the "flow matching and filtering entry" is shown in Table 2:

**Table 2**

| Matching condition | action after traffic matching |
|---|---|
| <SA=client1-IP, DA=service1-IP> | identifier 1 of SR policy,color C1+Endpoint:PE1 |
| <SA=client1-IP, DA=service1-IP> | identifier 1 of SR policy,color C2+Endpoint:PE2 |

In addition, when finding that a service message cannot hit one flow entry (SA, DA), the forwarding plane transmits the service message to the CPU, so as to trigger generation of a related flow entry. A forwarding action copies a latest BGP-FS for SRv6 policy (for example, SRv6 policy-2 issued at time T2).

A platform is required to collect traffic statistics of a particular "flow entry" of the forwarding plane, and ages the particular "flow entry" and issues a deletion instruction to the forwarding plane if no traffic is newly added within a certain period of time.

### Specific Example 4

The difference from Specific Example 2 lies in that in the example, a group of traffic is redirected to a plurality of SR-policies at the same time. In this case, a Binding SID is configured to identify the SR-policy, where Binding SID1 identifies SR-policy 1, and Binding SID2 identifies SR-policy 2. A process of a "flow filtering rule entry" is described below.

The examples specifically includes:
Step 1101: a BGP FLOWSPEC controller transmits a Flowspc route carrying a filtering rule redirected to one or more SR-policies.
Step 1102: a BGP Flowspec client generates a "flow matching and filtering entry".

The contents carried by a BGP flow-route include:
a matching condition, which is carried by NLRI and has a specific format of match DA; and
an action after matching, which can be carried by an extended community attribute redirected to an extended indirection-id and has a specific format as follows:
   action: set <extended community attribute redirected to extended indirection-id: Binding SID1, Binding SID2>.

The action after matching can also be carried jointly by an extended community attribute redirected to an extended indirection-id and a tunnel encapsulation attribute and has a specific format as follows:
action: set <extended community attribute redirected to extended indirection-id:identifier of SR policy group:1, SR-policy sub-TLV:color C1+Endpoint:PE1,SR-policy sub-TLV:color C2+Endpoint:PE2>.

For the extended community attribute redirected to the extended indirection-id, the SR policy group has two extensions: 1) A format of the extended community attribute redirected to the indirection-id, as shown in Fig. 7, is used, where an ID-type field defines a new type: the SR-policy group, and a corresponding generalized indirection_id is the SR-policy group or an existing 0. 2) An existing ID-type field, 0: a local ID, is used, where a corresponding Generalized indirection_id is the local ID, and the local ID indicates the SR-policy group.

Moreover, the extended community attribute redirected to the extended indirection-id is extended by one flag bit: N. When the flag bit is configured to identify the extended community attribute carrying a plurality of extended indirection-ids at different times for the same matching condition, the community attributes are in an additional addition relation instead of an overriding relation. Other formats remain unchanged.

Part of the content of the"flow matching and filtering entry" is shown in Table 3:

**Table 3**

| Matching condition | action after traffic matching |
|---|---|
| <DA > | Binding SID1 |
| <DA > | Binding SID2 |

In addition, when finding that a service message cannot hit one flow entry (DA), a forwarding plane transmits the service message to the CPU, so as to trigger generation of a related flow entry. A forwarding action copies a latest BGP-FS for SRv6 policy (for example, Binding SID1 and Binding SID2).

A platform is required to collect traffic statistics of a particular "flow entry" of the forwarding plane, and ages the particular "flow entry" and issues a deletion instruction to the forwarding plane if no traffic is newly added within a certain period of time.

### Specific Example 5

The differences from Specific Example 2 lie in that as shown in Fig. 10, in the example, a group of traffic is redirected to a plurality of SR-policies at the same time, and color+endpoint is configured to identify the SR-policy, where color C1+Endpoint:D identifies SR-policy 1, and color C2+Endpoint:D identifies SR-policy 2. A process of a "flow filtering rule entry" is described below.

Step 1201: a BGP FLOWSPEC controller transmits a Flowspc route carrying a filtering rule redirected to one or more SR-policies.

Step 1202: a BGP Flowspec client generates a "flow matching and filtering entry".

The contents carried by a BGP flow-route include:
a matching condition, which is carried by NLRI and has a format of match DA; and
an action after matching, which is carried jointly by an extended community attribute redirected to an extended indirection-id and a tunnel encapsulation attribute and has a format as follows:
   action: set <extended community attribute redirected to extended indirection-id:identifier of SR policy group:1, SR-policy sub-TLV: color C1+Endpoint:D, SR-policy sub-TLV:color C2+Endpoint:D>.

For the extended community attribute redirected to the extended indirection-id, the SR policy group has two extensions: 1) A format of the extended community attribute redirected to the indirection-id, as shown in Fig. 7, is used, where an ID-type field defines a new type: the SR-policy group, and a corresponding generalized indirection_id is the SR-policy group or an existing 0. 2) An existing ID-type field, 0: a local ID, is used, where a corresponding Generalized indirection_id is the local ID, and the local ID indicates the SR-policy group.

Part of the content of the "flow matching and filtering entry" is shown in Table 4:

**Table 4**

| Matching condition | action after traffic matching |
|---|---|
| <DA> | identifier 1 of SR policy group:color C1+Endpoint:D |
| | color C2+Endpoint:D |

In addition, when finding that a service message cannot hit one flow entry (DA), a forwarding plane transmits the service message to the CPU, so as to trigger generation of a related flow entry. A forwarding action copies a latest BGP-FS for SRv6 policy.

A platform is required to collect traffic statistics of a particular "flow entry" of the forwarding plane, and ages the particular "flow entry" and issues a deletion instruction to the forwarding plane if no traffic is newly added within a certain period of time.

Apparently, those skilled in the art should understand that all the above modules or steps of the disclosure can be implemented through a general-purpose computation apparatus, centralized on a single computation apparatus or distributed over a network composed of a plurality of computation apparatuses, and implemented through program codes executable by the computation apparatus. Therefore, the modules or steps can be stored in a storage apparatus to be executed by the computation apparatus. In certain cases, the steps shown or described can be executed in a different order from herein. Alternatively, some or all of the modules or the steps can be implemented by fabricating same into individual integrated circuit modules separately. In this way, the disclosure is not limited to any particular combination of hardware and software.

What are described above are merely the preferred examples of the disclosure, and are not intended to limit the disclosure. Those skilled in the art can make various modifications and variations to the disclosure. Any modifications, equivalent replacements, improvements, etc. made within the principles of the disclosure should fall within the scope of protection of the disclosure.

## Claims

1. A route acquisition method, comprising:
acquiring a flow specification (Flowspec) route from a controller, wherein the Flowspec route contains a target rule, and the target rule is configured to instruct received traffic to be redirected to one or more target segment routing policies (SR-policy).

2. The method according to claim 1, wherein after the acquiring a flow specification (Flowspec) route from a controller, the method further comprises:
after the traffic is received, redirecting the traffic to the target SR-policy based on the target rule.

3. The method according to claim 1, wherein the target rule comprises a target condition and a target action, the target condition comprises a condition for matching the traffic, and the target action is action information executed on the traffic after the traffic is matched.

4. The method according to claim 3, wherein the target condition is carried by network layer reachability information (NLRI) contained in the Flowspec route.

5. The method according to claim 3, wherein the target action is carried by an extended community attribute contained in the Flowspec route.

6. The method according to claim 5, wherein the extended community attribute comprises a target bit, and the target bit is configured to identify a target relation between the extended community attribute and other received community attributes; and the target relation comprises one of the following: the extended community attribute overrides the other community attributes, or the extended community attribute coexists with the other community attributes.

7. The method according to claim 6, wherein the extended community attribute and the other community attributes are transmitted by the controller at the same time or different time.

8. The method according to claim 7, wherein the extended community attribute and the other community attributes are set for the same group of flows or the same service.

9. The method according to claim 5, wherein the extended community attribute comprises a target field, the target field has a pre-determined value, and the pre-determined value is configured to indicate an identifier type of the target SR-policy.

10. The method according to claim 9, wherein the pre-determined value comprises at least one of the following:
a type value of a local identifier (ID) and a pre-defined type value.

11. The method according to claim 5, wherein the extended community attribute comprises an identifier of the SR-policy; and an identifier of an SR-policy group is carried by an SR-policy identifier field under the condition that the local ID identifies a meaning of the SR-policy group or the pre-defined type value means a meaning of the SR-policy group.

12. The method according to claim 9, wherein the Flowspec route further comprises an extended tunnel encapsulation attribute; and the extended tunnel encapsulation attribute is configured to identify an SR-sub-policy in a target SR-policy group under the condition that the target SR-policy comprises an SR-policy type identified by the pre-determined value.

13. The method according to claim 5, wherein the Flowspec route further comprises an extended tunnel encapsulation attribute, and the target action is carried jointly by the extended community attribute and the extended tunnel encapsulation attribute.

14. The method according to claim 3, wherein the redirecting the traffic to the target SR-policy based on the target rule comprises:
matching the traffic according to the target condition; and
processing the traffic according to the target action under the condition that the target action corresponding to the traffic is matched, so as to redirect the traffic to the target SR-policy.

15. The method according to claim 14, wherein
the matching the traffic according to the target condition comprises: matching the traffic in a first pre-generated flow matching entry, wherein the first flow matching entry comprises a target condition and a target action that correspond to each other, the target condition is configured to indicate matching information, and the target action is configured to indicate an SR-policy; and
the processing the traffic according to the target action under the condition that the target action corresponding to the traffic is matched, so as to redirect the traffic to the target SR-policy comprises: redirecting the traffic to the target SR-policy in the first flow matching entry under the condition that the traffic is matched in the first pre-generated flow matching entry.

16. The method according to claim 15, wherein after address matching is performed on the traffic in the first pre-generated flow matching entry, the method further comprises:
transmitting a first instruction to a processor to instruct the processor to generate a second flow matching entry under the condition that no target action corresponding to the traffic is matched in the first pre-generated flow matching entry, wherein the second flow matching entry comprises the target condition configured for an indication.

17. The method according to claim 15, further comprising:
receiving a second instruction from a processor; and
deleting the first flow matching entry based on the second instruction.

18. A route transmission method, comprising:
sending a flow specification (Flowspec) route to a target client, wherein the Flowspec route contains a target rule, and the target rule is configured to instruct received traffic to be redirected to one or more target segment routing policies (SR-policies).

19. The method according to claim 18, wherein
the target rule comprises a target condition and a target action, the target condition comprises a condition for matching the traffic, and the target action is action information executed on the traffic after the traffic is matched.

20. The method according to claim 19, wherein the target action is carried by an extended community attribute contained in the Flowspec route.

21. The method according to claim 20, wherein the extended community attribute comprises a target field, the target field has a pre-determined value, and the pre-determined value is configured to indicate an identifier type of the target SR-policy.

22. The method according to claim 20, wherein the extended community attribute comprises an identifier of the SR-policy; and an identifier of an SR-policy group is carried by an SR-policy identifier field under the condition that a local ID identifies a meaning of the SR-policy group or a pre-defined type value is a meaning of the SR-policy group.

23. A route acquisition apparatus, comprising:
an acquisition module, configured to acquire a flow specification (Flowspec) route from a controller, wherein the Flowspec route contains a target rule, and the target rule is configured to instruct received traffic to be redirected to one or more target segment routing policies (SR-policies).

24. A route transmission apparatus, comprising:
a sending module, configured to send a flow specification (Flowspec) route to a target client, wherein the Flowspec route contains a target rule, and the target rule is configured to instruct received traffic to be redirected to one or more target segment routing policies (SR-policies).

25. A computer-readable storage medium, storing a computer program, wherein the computer program is configured to, when executed by a processor, implement steps of the method according to any one of claims 1-22.

26. An electronic apparatus, comprising a memory, a processor, and a computer program stored on the memory and runnable on the processor, wherein the processor is configured to, when executing the computer program, implement steps of the method according to any one of claims 1-22.
